# DEMANDE DE BREVET EUROPEEN

(11) **EP 4 661 230 A1**
(43) Date de publication de la demande: **10.12.2025**
(21) Numéro de dépôt: 25179220.6
(22) Date de dépôt: 27.05.2025
(51) Int. Cl.: H02H 3/10, H02H 3/32

(54) **CIRCUIT DE PROTECTION D'UN SYSTÈME D'ALIMENTATION ÉLECTRIQUE TRIPHASÉ**

(30) Priorité: 04.06.2024 FR 2405826
(71) Demandeur: SCHNEIDER ELECTRIC INDUSTRIES SAS, 92500 Rueil-Malmaison (FR)
(72) Inventeur: BONJEAN, Eloise, 38260 LE MOTTIER (FR)
(74) Mandataire: Plasseraud IP

(57) **Abrégé**

L'invention concerne un circuit de protection (2) pour un système d'alimentation électrique (4) moyenne-tension, le système d'alimentation électrique ayant trois lignes de phase (L1, L2, L3), le circuit de protection comprenant :
- au moins trois premiers transformateurs de courant (10, 12, 14), les premiers transformateurs de courant (10, 12, 14) ayant chacun un côté primaire et un côté secondaire, le côté primaire de chaque premier transformateur de courant étant couplé à une ligne de phase (L1, L2, L3) différente,
- au moins trois deuxièmes transformateurs de courant (16, 18, 20), les deuxièmes transformateurs de courant ayant chacun un côté primaire et un côté secondaire, les côtés primaires des deuxièmes transformateurs de courant étant connectés aux côtés secondaires des premiers transformateurs de courant,
- au moins deux fusibles (28), les fusibles (28) étant chacun connectés en parallèle aux côtés primaires des deuxièmes transformateurs de courant.

## Description

### Domaine technique de l'invention

La présente invention concerne un circuit de protection pour un système d'alimentation électrique moyenne-tension utilisant un actionneur de déclenchement.

### Etat de la technique antérieure

Il est connu de FR 2 414 810 une installation de relais de protection pour un circuit de distribution polyphasé. Toutefois, cette installation comprend un transformateur de courant supplémentaire. De plus, le circuit de déclenchement de cette installation doit être alimenté en permanence par une source d'alimentation supplémentaire externe. Enfin, dans cette installation, un courant circule en permanence dans les transformateurs de courant.

Il est connu du document EP 2 079 140 un circuit de protection comprenant trois transformateurs de courant couplés chacun directement à une ligne de phase et trois fusibles connectés entre les bornes de sortie du transformateur de courant.

Toutefois, ce circuit de protection comprend des transformateurs de courant couplés aux lignes de phase ayant un volume important.

Il est souhaité, pour réduire les coûts, d'utiliser des transformateurs de courant basse puissance peu volumineux. Ces transformateurs ne peuvent pas délivrer une puissance aussi élevée, ce qui fait obstacle à leur utilisation avec les chaînes des composants connues des actionneurs de déclenchement.

De plus, ce circuit ne permet pas de détecter les défauts de terre.

Il est également connu d'avoir deux électro-aimants ou plus dans la chaîne des composants de l'actionneur de déclenchement pour déclencher la coupure du système d'alimentation, ce qui prend de la place au sein de ces composants.

Enfin, le nombre de variantes de fusible nécessaires pour couvrir la gamme des caractéristiques de déclenchement souhaitée par les utilisateurs est généralement élevé.

### Présentation de l'invention

Un premier but de la présente invention est de proposer un circuit de protection compact notamment transformateurs de traversée par utilisation de transformateurs basse consommation couplés aux phases.

Un deuxième but de la présente invention est de proposer un circuit de protection qui permet de réduire le nombre de variantes de fusible pour simplifier l'exploitation du système d'alimentation.

Un troisième but de la présente invention est de proposer un circuit de protection ayant un faible coût de fabrication et présentant une faible consommation électrique. Un quatrième but de la présente invention est de proposer un circuit de protection fiable et robuste.

### Résumé de l'invention

La présente invention a pour objet un circuit de protection pour un système d'alimentation électrique moyenne-tension, le système d'alimentation électrique ayant une première ligne de phase, une deuxième ligne de phase et une troisième ligne de phase, le circuit de protection comprenant :
- un premier transformateur de courant à traversée ayant un côté primaire couplé à la première ligne de phase, et un côté secondaire,
- un deuxième transformateur de courant à traversée ayant un côté primaire couplé à la deuxième ligne de phase, et un côté secondaire,
- un troisième transformateur de courant à traversée ayant un côté primaire couplé à la troisième ligne de phase et un côté secondaire,
- un premier transformateur de courant de surintensité ayant un côté primaire connectée au côté secondaire du premier transformateur de courant à traversée, et un côté secondaire,
- un deuxième transformateur de courant de surintensité ayant un côté primaire connectée au côté secondaire du troisième transformateur de courant à traversée, et un côté secondaire,
- un transformateur de courant de défaut de terre ayant un côté primaire connectée au côté secondaire du deuxième transformateur de courant à traversée, et un côté secondaire,
- un premier fusible connecté en parallèle au côté primaire du premier transformateur de courant de surintensité, et un deuxième fusible connecté en parallèle au côté primaire du deuxième transformateur de courant de surintensité.

Avantageusement, ce circuit de protection fonctionne avec des fusibles de faible taille, de faible coût et faciles à changer car ils ne nécessitent pas d'intervenir au côté moyenne tension de la cellule
Avantageusement, le premier transformateur de courant de surintensité, le deuxième transformateur de courant de surintensité et le transformateur de courant de défaut de terre réalisent une adaptation de courant et une adaptation en tension entre les secondaires des transformateurs de courant à traversée, l'entrée de l'actionneur de déclenchement.

Avantageusement, dans le circuit de protection selon l'invention, un courant circule dans les transformateurs de courant de surintensité que en cas de défaut de phase.

Les caractéristiques exposées dans les paragraphes suivants peuvent, optionnellement, être mises en œuvre. Elles peuvent être mises en œuvre indépendamment les unes des autres ou en combinaison les unes avec les autres :
- Le côté secondaire du premier transformateur de courant à traversée comprend une première borne de sortie qui est raccordée à un premier point de connexion, le côté secondaire du deuxième transformateur de courant à traversée comprend une première borne de sortie qui est raccordée au premier point de connexion, le coté secondaire du troisième transformateur de courant à traversée comprend une première borne de sortie qui est raccordée au premier point de connexion.
- Le premier point de connexion est connectée à au moins une borne de terre parmi une première borne de terre, une deuxième borne de terre et une troisième borne de terre.
- le côté primaire du premier transformateur de courant de surintensité comprend une borne aval, le côté primaire du deuxième transformateur de courant de courant de surintensité comprend une borne aval, le côté primaire du transformateur de courant de défaut de terre comprend une borne amont ; la borne aval du côté primaire du premier transformateur de surintensité est connectée à la borne aval du côté primaire du deuxième transformateur de courant de courant de surintensité et à la borne amont du côté primaire du transformateur de courant de défaut de terre, en un deuxième point de connexion et selon une configuration en étoile.
- Le deuxième point de connexion est situé en aval du premier transformateur de courant de surintensité, en aval du deuxième transformateur de courant de surintensité et en amont du transformateur de courant de défaut de terre.
- Le côté primaire du premier transformateur de courant de surintensité comprend une borne aval connectée à une borne aval du côté primaire du deuxième transformateur de courant de courant de surintensité et à une borne amont du transformateur de courant de défaut de terre, en un deuxième point de connexion et selon une configuration en étoile ; le deuxième point de connexion est situé en aval du premier transformateur de courant de surintensité, en aval du deuxième transformateur de courant de surintensité et en amont du transformateur de courant de défaut de terre.

Avantageusement, le circuit de protection détecte les défauts de surintensité et les défauts de terre.
- Le côté primaire du transformateur de courant de défaut de terre comprend une borne aval connectée électriquement au premier point de connexion.
- Le circuit de protection comporte un unique actionneur de déclenchement configuré pour déclencher un disjoncteur, un premier redresseur de courant, un deuxième redresseur de courant et un troisième redresseur de courant, le premier redresseur de courant étant connecté en entrée au côté secondaire du premier transformateur de courant de surintensité, le deuxième redresseur de courant étant connecté en entrée au côté secondaire du transformateur de courant de défaut de terre, le troisième redresseur de courant étant connecté en entrée au côté secondaire du deuxième transformateur de courant de surintensité, le premier redresseur de courant, le deuxième redresseur de courant et le troisième redresseur de courant étant connectés en sortie audit actionneur de déclenchement.
- Le premier transformateur de courant de surintensité est configuré pour écrêter l'intensité du courant en sortie du premier transformateur de courant à traversée, le deuxième transformateur de courant de surintensité est configuré pour écrêter l'intensité du courant en sortie du deuxième transformateur de courant à traversée, le transformateur de courant de défaut de terre est configurés pour écrêter l'intensité du courant en sortie du troisième transformateur de courant à traversée.
- Le premier transformateur de courant de surintensité, le deuxième transformateur de courant de surintensité et le transformateur de courant de défaut de terre présentent chacun une tension de saturation comprise entre une et deux fois la tension de fonctionnement de l'actionneur de déclenchement.
- Le premier fusible et le deuxième fusible sont choisis parmi des fusibles ayant un courant nominal choisi parmi 3 Ampères, 5 Ampères et 7,5 Ampères.

Avantageusement, le circuit de protection peut fonctionner sur une large plage de tension avec un nombre réduit de références de fusible.

Avantageusement, le diamètre des fils électriques est plus faible. Avantageusement, il y a moins de perte de puissance dans les composants du circuit.

Avantageusement, le circuit de protection est moins cher.
- Les rapports de nombre d'enroulements entre le côté primaire et le côté secondaire du premier transformateur de courant à traversée, entre le côté primaire et le côté secondaire du deuxième transformateur à traversée, et entre le côté primaire et le côté secondaire du troisième transformateur à traversée, sont de 50/5, 100/5 et 200/5.

Avantageusement, les transformateurs de courant de surintensité et le transformateur de courant de défaut de terre réalisent un rôle écrêtage des courants entrant dans les transformateurs.

Avantageusement, le nombre d'enroulements des transformateurs de courant à traversée est réduit.

Avantageusement, le cout de production des secondaires des transformateurs de courant à traversée est réduit.

Avantageusement, les transformateurs de courant de surintensité et le transformateur de courant de défaut de phase ne comportent pas d'enroulements spécifiques pour l'actionneur de déclenchement. Il en résulte une plus grande compacité à un emplacement où la place disponible est réduite en particulier en raison de l'isolation moyenne tension basse tension.
- Le circuit de protection comporte une première résistance connectée en parallèle en entrée du premier redresseur de courant, une deuxième résistance connectée en parallèle en entrée du deuxième redresseur de courant et une troisième résistance connectée en parallèle en entrée du troisième redresseur de courant.

L'invention concerne également un circuit électrique comprenant :
- un système d'alimentation électrique moyenne-tension, le système d'alimentation électrique ayant une première ligne de phase, une deuxième ligne de phase et une troisième ligne de phase,
- un disjoncteur configurer pour couper le courant sur la première ligne de phase, la deuxième ligne de phase ou la troisième ligne de phase,
- un circuit de protection conforme aux caractéristiques mentionnées ci-dessus.

### Brève description des figures

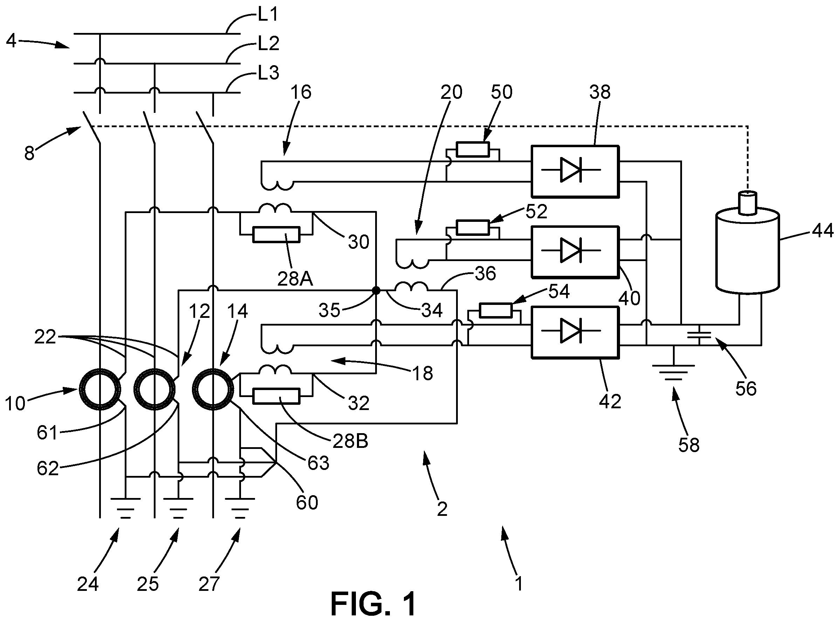

[Fig. 1] est une vue schématique d'un circuit électrique selon l'invention.

### Description détaillée de l'invention

Dans la présente description, les termes « amont » et «aval » sont à interpréter en fonction du sens du courant dans le circuit de protection.

L'invention concerne un circuit électrique 1 et un circuit de protection 2. En référence à l'unique figure, le circuit électrique 1 comprend un système d'alimentation électrique 4, un circuit de protection 2 couplé au système d'alimentation électrique 4 et un disjoncteur 8 configuré pour couper le courant sur le système d'alimentation électrique 4.

Le système d'alimentation électrique 4 est un système d'alimentation électrique à moyenne-tension.

Le terme « moyenne-tension » fait référence à des tensions supérieures à 1 kV et inférieures à 52 kV. Le système d'alimentation électrique 4 est configuré pour transporter un courant alternatif triphasé. A cet effet, le système d'alimentation électrique 4 possède une première ligne de phase L1, une deuxième ligne de phase L2 et une troisième ligne de phase L3.

Le disjoncteur 8 est connecté aux trois lignes de phase en amont du circuit de protection 2. Dans le mode de réalisation illustré sur la figure et nullement limitatif, le disjoncteur 8 comprend trois contacts connectés chacun à une ligne de phase.

Le circuit de protection 2 est connecté en aval du système d'alimentation électrique 4. Le circuit de protection 2 comprend un premier transformateur de courant à traversée 10, un deuxième transformateur de courant à traversée 12 et un troisième transformateur de courant à traversée 14 (en anglais « bushing transformer »). Le premier transformateur de courant à traversée 10, le deuxième transformateur de courant à traversée 12 et le troisième transformateur de courant à traversée 14 présentent chacun un côté moyenne-tension, dit côté primaire et un côté basse tension, dit côté secondaire.

Le côté primaire du premier transformateur de courant à traversée 10 est couplé à la première ligne de phase L1 du système d'alimentation électrique. Le côté primaire du deuxième transformateur de courant à traversée 12 est couplé à la deuxième ligne de phase L2 du système d'alimentation électrique. Le troisième transformateur de courant à traversée 14 est couplé à la troisième ligne de phase L3 du système d'alimentation électrique.

Le côté secondaire du premier transformateur de courant à traversée 10 comprend une première borne de sortie 61 qui est raccordée à un premier point de connexion 60. Le côté secondaire du deuxième transformateur de courant à traversée 12 comprend une première borne de sortie 62 qui est raccordée au premier point de connexion 60. Le coté secondaire du troisième transformateur de courant à traversée 14 comprend une première borne de sortie 63 qui est raccordée au premier point de connexion 60.

Le circuit de protection 2 comprend en outre un premier transformateur de courant de surintensité 16, un deuxième transformateur de courant de surintensité 18 et un transformateur de courant de défaut de terre 20, une première borne de terre 24, une deuxième borne de terre 25, une troisième borne de terre 27, un premier fusible 28A et un deuxième fusible 28B.

Le premier point de connexion 60 est connecté à au moins une borne de terre parmi la première borne de terre 24, la deuxième borne de terre 25 et la troisième borne de terre 27.

Le premier transformateur de courant de surintensité 16, le deuxième transformateur de courant de surintensité 18 et le transformateur de courant de défaut de terre 20 possèdent chacun un côté primaire et un côté secondaire.

Le premier transformateur de courant de surintensité 16 est connecté au premier transformateur de courant à traversée 10. Le deuxième transformateur de courant de surintensité 18 est connecté au troisième transformateur de courant à traversée 14. Le transformateur de courant de défaut de terre 20 est connecté au deuxième transformateur de courant à traversée 12.

Une deuxième borne de sortie 22 du côté secondaire du premier transformateur de courant à traversée 10 est connectée au côté primaire du premier transformateur de courant de surintensité 16. La première borne de sortie 61 du côté secondaire du premier transformateur de courant à traversée 10 est connectée à la première borne de terre 24.

Une deuxième borne de sortie 22 du côté secondaire du deuxième transformateur de courant à traversée 12 est connectée au côté primaire du transformateur de courant de défaut de terre 20. La deuxième borne de sortie 62 du côté secondaire du deuxième transformateur de courant à traversée 12 est connectée à la deuxième borne de terre 25.

Une deuxième borne de sortie 22 du côté secondaire du troisième transformateur de courant à traversée 14 est connectée au côté primaire du deuxième transformateur de courant de surintensité 18. La première borne de sortie 63 du côté secondaire du troisième transformateur de courant à traversée 14 est connectée à la troisième borne de terre 27.

Le premier transformateur de courant de surintensité 16 et le deuxième transformateur de courant de surintensité 18 sont propres à détecter une surintensité. C'est pourquoi, ils sont appelés premier transformateur de courant de surintensité 16 et respectivement deuxième transformateur de courant de surintensité 18. Le transformateur de courant de défaut de terre 20 est propre à détecter un défaut de terre. C'est pourquoi, il est appelé transformateur de défaut de terre 20.

Un premier fusible 28A est connecté en parallèle au côté primaire du premier transformateur de courant de surintensité 16. Le deuxième fusible 28B est connecté en parallèle au côté primaire du deuxième transformateur de courant de surintensité 18.

Le côté primaire du premier transformateur de courant de surintensité 16 comprend une borne aval 30. Le côté primaire du deuxième transformateur de courant de courant de surintensité 18 comprend une borne aval 32. Le côté primaire du transformateur de courant de défaut de terre 20 comprend une borne amont 34. Le côté primaire du transformateur de courant de défaut de terre 20 comprend une borne aval 36qui est connectée électriquement au premier point de connexion 60. La borne aval 30 du côté primaire du premier transformateur de courant de surintensité 16 est connectée à la borne aval 32 du côté primaire du deuxième transformateur de courant de surintensité 18 et à la borne amont 34 du côté primaire du transformateur de courant de défaut de terre 20, en un point de connexion 35, selon une configuration en étoile.

La borne aval 36 du côté primaire du transformateur de courant de défaut de terre 20 est connectée à la première borne de terre 24, la deuxième borne de terre 25 et la troisième borne de terre 27.

Le deuxième point de connexion 35 est situé en aval du premier transformateur de courant de surintensité 16, en aval du deuxième transformateur de courant de surintensité 18 et en amont du transformateur de courant de défaut de terre 20.

Le premier transformateur de courant de surintensité 16, le deuxième transformateur de courant de surintensité 18 et le transformateur de courant de défaut de terre 20 sont configurés pour écrêter l'intensité du courant en sortie du premier transformateur de courant à traversée 10, du deuxième transformateur de courant à traversée 12 et respectivement du troisième transformateur de courant à traversée 14.

En particulier, le premier transformateur de courant de surintensité 16, le deuxième transformateur de courant de surintensité 18 et le transformateur de courant de défaut de terre 20 présentent une tension de saturation au secondaire comprise entre une et deux fois la tension de fonctionnement de l'actionneur de déclenchement.

Par exemple, le premier transformateur de courant de surintensité 16, le deuxième transformateur de courant de surintensité 18 et le transformateur de courant de défaut de terre 20 présentent une tension de saturation au secondaire comprise entre une et deux fois la tension de fonctionnement de l'actionneur de déclenchement. Par exemple, la tension de saturation est comprise entre 4 Volts et 8 Volts.

Enfin, le circuit de protection 2 comprend un premier redresseur de courant 38, un deuxième redresseur de courant 40, un troisième redresseur de courant 42 et un actionneur de déclenchement 44.

Le premier redresseur de courant 38 est connecté en entrée au côté secondaire du premier transformateur de courant de surintensité 16 et en sortie à l'actionneur de déclenchement 44.

Le deuxième redresseur de courant 40 est connecté en entrée au côté secondaire du transformateur de courant de défaut de terre 20 et en sortie à l'actionneur de déclenchement 44

Le troisième redresseur de courant 42 est connecté en entrée au côté secondaire du deuxième transformateur de courant de surintensité 18 et en sortie à l'actionneur de déclenchement 44.

De préférence, le premier redresseur de courant 38, le deuxième redresseur de courant 40 et le troisième redresseur de courant 42 sont configurés pour écrêter la tension et limiter ainsi la puissance qui y est transmise. Avantageusement, cet écrêtage permet d'assurer que l'actionneur de déclenchement ne sera pas endommagé en cas de court-circuit au primaire des transformateurs.

Le premier redresseur de courant 38, le deuxième redresseur de courant 40 et le troisième redresseur de courant 42 sont, par exemple, constitués par des ponts de diodes. De préférence, les ponts de diodes comprennent des diodes Schottky. L'actionneur de déclenchement 44 est propre à déclencher le disjoncteur 8. L'actionneur de déclenchement 44 est, par exemple, un actionneur de déclenchement à électroaimant. Avantageusement, le circuit de protection 8 comporte un unique actionneur de déclenchement. Ainsi, le circuit de protection est moins volumineux et moins couteux.

De préférence, le circuit de protection 2 comporte une première résistance 50 connectée en parallèle en entrée du premier redresseur de courant 38, une deuxième résistance 52 connectée en parallèle en entrée du deuxième redresseur de courant 40, et une troisième résistance 54 connectée en parallèle en entrée du troisième redresseur de courant 42.

Avantageusement, la première résistance, la deuxième résistance et la troisième résistance permettent de limiter les surtensions et d'ajuster avec finesse le niveau du seuil de déclenchement.

De préférence, le circuit de protection 2 comporte en outre un condensateur 56 connecté en parallèle de l'actionneur de déclenchement.

De préférence, le circuit de protection 2 comporte une borne de terre 58 connectée à la borne négative de l'actionneur de déclenchement.

De préférence, les rapports de nombre d'enroulements entre le côté primaire et le côté secondaire du premier transformateur à traversée 10, entre le côté primaire et le côté secondaire du deuxième transformateur à traversée 12 et entre le côté primaire et le côté secondaire du troisième transformateur à traversée 14, sont de 50/5, 100/5 et 200/5.

En fonctionnement normal, lorsqu'un courant alternatif moyenne-tension est transporté par la première ligne de phase L1, par la deuxième ligne de phase L2 et par la troisième ligne de phase L3, un courant alternatif est transmis au premier transformateur de courant de surintensité 16, au deuxième transformateur de courant de surintensité 18 et au transformateur de courant de défaut de terre 20 par l'intermédiaire du premier transformateurs de courant à traversée 10, du deuxième transformateur de courant à traversée 12 et respectivement du troisième transformateur de courant à traversée 14. Le courant au primaire présente une amplitude d'environ 5 Ampères. Ce courant traverse principalement le premier fusible 28A et le deuxième fusible 28B. Un courant résiduel de faible amplitude est transmis au côté secondaire du premier transformateur de courant de surintensité 16, au côté secondaire du deuxième transformateur de courant de surintensité 18 et au côté secondaire au transformateur de courant de défaut de terre 20. Ce courant est redressé par le premier redresseur de courant 38, le deuxième redresseur de courant 40 et le troisième redresseur de courant 42. Ce courant résiduel présente une amplitude très faible. Cette amplitude est bien inférieure au seuil de déclenchement de l'actionneur de déclenchement 44. Le disjoncteur 8 n'est pas déclenché.

En cas de court-circuit sur la première ligne de phase L1, la deuxième ligne de phase L2 ou la troisième ligne de phase L3, un courant de forte amplitude est transmis au côté primaire d'au moins un transformateur parmi le premier transformateur de courant de surintensité 16 et le deuxième transformateur de surintensité 18, et à l'un au moins parmi le premier fusible 28A et le deuxième fusible 28B.

Ce courant présente une intensité supérieure au courant nominal du premier fusible 28A et/ou au courant nominal du deuxième fusible 28B de sorte que le premier fusible 28A et/ou le deuxième fusible 28B fondent.

La résistance du premier fusible 28A et/ou la résistance du deuxième fusible 28B augmente. L'intensité du courant transmis au côté secondaire du premier transformateur de courant de surintensité 16 et/ou au côté secondaire du deuxième transformateur de courant de surintensité 18 augmente.

Ce courant de forte intensité est redressé par le premier redresseur de courant 38 et/ou le troisième redresseur de courant 42. Il est supérieur au seuil de déclenchement de l'actionneur de déclenchement 44. L'actionneur de déclenchement 44 déclenche le disjoncteur 8.

En cas de défaut de terre sur la première ligne de phase L1, la deuxième ligne de phase L2 ou la troisième ligne de phase L3, les courants arrivant au point de connexion 35 ne présentent plus la même amplitude. Le système n'est plus équilibré. Un courant circule sur la ligne reliant le point de connexion 35 à la première borne de sortie de masse 24. Un courant est transmis au côté secondaire du transformateur de défaut de terre 20. Ce courant est redressé par le deuxième redresseur de courant 40. Ce courant est ensuite transmis à l'actionneur de déclenchement 44 et entraine le déclenchement du disjoncteur 8.

## Revendications

1. Circuit de protection (2) pour un système d'alimentation électrique (4) moyenne-tension, le système d'alimentation électrique ayant une première ligne de phase (L1), une deuxième ligne de phase (L2) et une troisième ligne de phase (L3), le circuit de protection comprenant :
- un premier transformateur de courant à traversée (10) ayant un côté primaire couplé à la première ligne de phase, et un côté secondaire,
- un deuxième transformateur de courant à traversée (12) ayant un côté primaire couplé à la deuxième ligne de phase, et un côté secondaire,
- un troisième transformateur de courant à traversée (14) ayant un côté primaire couplé à la troisième ligne de phase, et un côté secondaire,
- un premier transformateur de courant de surintensité (16) ayant un côté primaire connectée au côté secondaire du premier transformateur de courant à traversée (10), et un côté secondaire,
- un deuxième transformateur de courant de surintensité (18) ayant un côté primaire connectée au côté secondaire du troisième transformateur de courant à traversée (14), et un côté secondaire,
- un transformateur de courant de défaut de terre (20) ayant un côté primaire connectée au côté secondaire du deuxième transformateur de courant à traversée (12), et un côté secondaire,
- un premier fusible (28A) connecté en parallèle au côté primaire du premier transformateur de courant de surintensité (16), et un deuxième fusible (28B) connecté en parallèle au côté primaire du deuxième transformateur de courant de surintensité (18).

2. Circuit de protection (2) selon la revendication 1, dans lequel le côté secondaire du premier transformateur de courant à traversée (10) comprend une première borne de sortie (61) qui est raccordée à un premier point de connexion (60), le côté secondaire du deuxième transformateur de courant à traversée (12) comprend une première borne de sortie (62) qui est raccordée au premier point de connexion (60), le coté secondaire du troisième transformateur de courant à traversée (14) comprend une première borne de sortie (63) qui est raccordée au premier point de connexion (60).

3. Circuit de protection (2) selon la revendication 2, dans lequel le premier point de connexion (60) est connectée à au moins une borne de terre parmi une première borne de terre (24), une deuxième borne de terre (25) et une troisième borne de terre (27).

4. Circuit de protection (2) selon l'une quelconque des revendications 1 à 3, dans lequel le côté primaire du premier transformateur de courant de surintensité (16) comprend une borne aval (30), le côté primaire du deuxième transformateur de courant de courant de surintensité (18) comprend une borne aval (32), le côté primaire du transformateur de courant de défaut de terre (20) comprend une borne amont (34) ; la borne aval (30) du côté primaire du premier transformateur de surintensité est connectée à la borne aval (32) du côté primaire du deuxième transformateur de courant de courant de surintensité et à la borne amont (34) du côté primaire du transformateur de courant de défaut de terre, en un deuxième point de connexion (35) et selon une configuration en étoile.

5. Circuit de protection (2) selon la revendication 4, dans lequel le deuxième point de connexion (35) est situé en aval du premier transformateur de courant de surintensité (16), en aval du deuxième transformateur de courant de surintensité (18) et en amont du transformateur de courant de défaut de terre (20).

6. Circuit de protection (2) selon l'une quelconque des revendications 2 à 5, dans lequel le côté primaire du transformateur de courant de défaut de terre (20) comprend une borne aval (36) connectée électriquement au premier point de connexion (60).

7. Circuit de protection (2) selon l'une quelconque des revendications 1 à 6, qui comporte un unique actionneur de déclenchement (44) configuré pour déclencher un disjoncteur (8), un premier redresseur de courant (38), un deuxième redresseur de courant (40) et un troisième redresseur de courant (42), le premier redresseur de courant (38) étant connecté en entrée au côté secondaire du premier transformateur de courant de surintensité (16), le deuxième redresseur de courant (40) étant connecté en entrée au côté secondaire du transformateur de courant de défaut de terre (20), le troisième redresseur de courant (42) étant connecté en entrée au côté secondaire du deuxième transformateur de courant de surintensité (18), le premier redresseur de courant, le deuxième redresseur de courant et le troisième redresseur de courant étant connectés en sortie au dit actionneur de déclenchement (44).

8. Circuit de protection (2) selon la revendication 1, dans lequel le premier transformateur de courant de surintensité (16) est configuré pour écrêter l'intensité du courant en sortie du premier transformateur de courant à traversée (10), le deuxième transformateur de courant de surintensité (18) est configuré pour écrêter l'intensité du courant en sortie du deuxième transformateur de courant à traversée (12), et le transformateur de courant de défaut de terre (20) est configuré pour écrêter l'intensité du courant en sortie du troisième transformateur de courant à traversée (14).

9. Circuit de protection (2) selon l'une quelconque des revendications 7 et 8, dans lequel le premier transformateur de courant de surintensité (16), le deuxième transformateur de courant de surintensité (18) et le transformateur de courant de défaut de terre (20) présentent chacun une tension de saturation comprise entre une et deux fois la tension de fonctionnement de l'actionneur de déclenchement.

10. Circuit de protection (2) selon l'une quelconque des revendications 1 à 9, dans lequel le premier fusible (28A) et le deuxième fusible (28B) sont choisis parmi des fusibles ayant un courant nominal choisi parmi 3 Ampères, 5 Ampères et 7,5 Ampères.

11. Circuit de protection (2) selon l'une quelconque des revendications 1 à 10, dans lequel les rapports de nombre d'enroulements entre le côté primaire et le côté secondaire du premier transformateur à traversée (10), entre le côté primaire et le côté secondaire du deuxième transformateur à traversée (12) et entre le côté primaire et le côté secondaire du troisième transformateur à traversée (14), sont de 50/5, 100/5 et 200/5.

12. Circuit de protection (2) selon l'une quelconque des revendications 6 à 11, qui comporte une première résistance (50) connectée en parallèle en entrée du premier redresseur de courant (38), une deuxième résistance (52) connectée en parallèle en entrée du deuxième redresseur de courant (40), et une troisième résistance (54) connectée en parallèle en entrée du troisième redresseur de courant (42).

13. Circuit électrique (1) comprenant :
- un système d'alimentation électrique (4) moyenne-tension, le système d'alimentation électrique ayant une première ligne de phase (L1), une deuxième ligne de phase (L2) et une troisième ligne de phase (L3),
- un disjoncteur (8) configurer pour couper le courant sur la première ligne de phase (L1), la deuxième ligne de phase (L2) ou la troisième ligne de phase (L3),
- un circuit de protection (2) conforme à l'une des revendications 4 à 12.
